Europäisches Patentamt

European Patent Office

Office européen des brevets

(11) Publication number: **0 322 376**
**A2**

## (12) EUROPEAN PATENT APPLICATION

(21) Application number: **88830546.3**

(22) Date of filing: **20.12.88**

(51) Int. Cl.⁴: **A 61 C 19/00**
**A 61 L 2/00**

(30) Priority: **23.12.87 IT 502187**

(43) Date of publication of application:
**28.06.89 Bulletin 89/26**

(84) Designated Contracting States:
**CH DE ES FR GB GR LI SE**

(71) Applicant: **CASTELLINI S.p.A.**
**Via Saliceto, 22**
**I-40013 Castelmaggiore (Bologna) (IT)**

(72) Inventor: **Castellini, Franco**
**Via Bellinzona, 60**
**I-40135 Bologna (IT)**

(74) Representative: **Lanzoni, Luciano**
**c/o BUGNION S.p.A. Via Farini, 37**
**I-40124 Bologna (IT)**

(54) Equipment for sterilizing and/or rinsing medical, and in particular, dental surgery instruments.

(57) The equipment comprises a cold sterilizing basin (1) forming part of apparatus (2) operated from a relative set of controls, and a rinse basin (3), both of which are carried by the same stand (4). The rinse basin (3) uses water supplied through a pipeline (5) routed by way of further sterilizing apparatus (6) operated from independent controls, and both basins (1, 3) are connected to a single waste outlet (7).

EP 0 322 376 A2

## Description

### Equipment for sterilizing and/or rinsing medical, and in particular, dental surgery instruments

The invention relates to equipment for sterilizing and/or rinsing medical instruments, in particular dental surgery instruments.

The art field of sterilizing systems for medical instruments, and for dental surgery instruments in particular, embraces equipment of various designs developed to suit the different types of instrument or accessory requiring sterilization.

In addition to conventional systems utilizing a pressure vessel filled with liquid sterilizer, the prior art includes a more recently developed type of equipment, designed by the present applicant, by which instruments can be sterilized cold using a chemical solution of prescribed pH value.

The equipment in question comprises a basin, able to accommodate the instruments, which is filled with electrolyte consisting in an aqueous solution having pH value of between 5.0 and 7.5 and a given concentration of chloride ions. Sterilization is brought about by electrolysis, and the condition of the electrolyte monitored continuously and adjusted at each step of the procedure.

The instruments sterilized by this cold immersion method must be rinsed thoroughly to ensure that no traces of the electrolyte, or of matter removed by sterilization, can find their way into the mouth of a patient during subsequent treatment.

This rinsing step is also of singular importance in preventing damage to the instruments occasioned by immersion in the electrolyte beyond the prescribed interval of time, given that the liquid sterilizer contains chloride and active chlorine ions, and is therefore a corrosive agent. At all events, the sterilized instruments should be handled as little as possible, to avoid further contamination. Accordingly, the object of the present invention is to provide equipment that permits of sterilizing medical instruments, and rinsing them swiftly and easily following sterilization.

The stated object is realized with sterilizing and rinsing equipment as characterized in the appended claims; such equipment comprises a basin in which instruments are immersed for sterilization (cold) by relative apparatus, and a rinse basin, both such basins being carried by a common stand. According to the invention, water is supplied to the rinse basin through a pipeline routed by way of further apparatus which sterilizes the rinsing water and can be activated independently of the sterilizating apparatus used for the instruments.

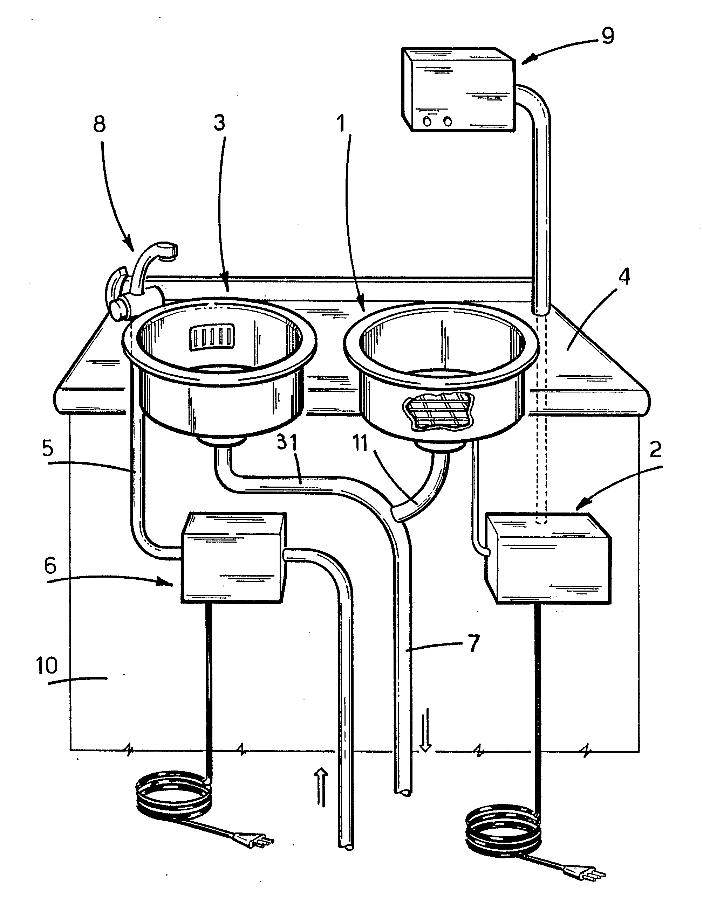

One advantage of the invention is that the various components used for sterilization and subsequent rinsing are grouped within reach of one another, resulting in a thoroughly practical package. A further advantage of the invention is that the sterilized instruments can be rinsed with water either drawn direct from the domestic supply, or sterilized by the additional apparatus provided. The invention will now be described in detail, by way of example, with the aid of the accompanying drawing, which shows the equipment in perspective. With reference to the drawing, equipment according to the invention comprises a basin 1 forming part of apparatus 2 by which the medical instruments are sterilized (in a preferred embodiment, sterilized cold in an electrolyte), a rinse basin 3, and a stand 4 by which both the basins are supported. The rinse basin 3 is provided with at least one water tap 8 connected to a supply pipeline 5 that either passes through or otherwise communicates with conventional water sterilizing apparatus 6, say, of the type utilizing ultraviolet radiation. The two sets of apparatus 2 and 6 are governed from a monitoring and control panel 9, and connected to the electrical power supply independently.

The respective waste outlets 11 and 31 of the two basins 2 and 6 flow into a single main outlet 7. The stand 4 either coincides with or is provided by the top surface of a cabinet 10 inside of which the two sets of apparatus 2 and 6 and their pipelines and wiring will be installed, as discernable in the drawing.

With equipment thus embodied, the instruments can be sterilized cold in the usual way by immersion in the basin 1 of electrolyte, and with electrolysis accomplished, transferred from the sterilizing basin 1 to the rinse basin 3 without any risk of the corrosive electrolyte dripping to the floor. The instruments are rinsed using water supplied through the pipeline 5, which may be sterilized or unsterilized at the user's discretion, according to subsequent requirements.

To sterilize the rinsing water, it suffices simply to switch on the relative apparatus 6 from the control panel 9.

## Claims

1) Equipment for sterilizing and/or rinsing medical, and in particular, dental surgery instruments, characterized
in that it comprises a basin (1) associated with apparatus (2) for sterilization of the instruments, a rinse basin (3) in receipt of water supplied by way of a pipeline (5) passing through or otherwise connected to apparatus (6) for sterilization of the rinsing water, and a stand (4) by which both basins (1, 3) are supported.

2) Equipment as in claim 1, wherein the apparatus (2) for sterilization of the instruments and the apparatus (6) for sterilization of the rinsing water are independently controlled.